# EUROPEAN PATENT APPLICATION

(11) **EP 3 550 417 A1**
(43) Date of publication of application: **09.10.2019**
(21) Application number: 16922948.1
(22) Date of filing: 30.11.2016
(51) Int. Cl.: G06F 3/0488

(54) **ELECTRONIC DEVICE AND SOFT KEYBOARD DISPLAY METHOD**

(71) Applicant: Shenzhen Royole Technologies Co., Ltd., Shenzhen, Guangdong 518052 (CN)
(72) Inventor: LI, Jinxin, Shenzhen Guangdong 518052 (CN)
(74) Representative: Hamer, Christopher K.
(86) International application number: PCT/CN2016/107939
(87) International publication number: WO 2018/098668

(57) **Abstract**

The present disclosure provides a soft keyboard display method, applied to an electronic device. The method comprises: a biometric image of a current user of the electronic device is required; the acquired biometric image is analyzed using an image processing technology, and a current user category is determined according to an analysis result; a corresponding keyboard layout information is determined according to the current user category; and the display screen is controlled to display a soft keyboard having a corresponding layout according to the corresponding keyboard layout information after receiving a soft keyboard retrieval request. The present disclosure further provides an electronic device. The electronic device and the soft keyboard display method of the present disclosure can display the soft keyboard conforming to the user category according to the current user category.

## Description

### TECHNICAL FIELD

This present disclosure relates to electronic devices, and more particularly relates to an electronic device with soft keyboard input function and a soft keyboard display method thereof.

### BACKGROUND

At present, electronic devices, such as mobile phones and tablets with touch screens have become very common. Interaction mode of a touch screen is more direct, which greatly facilitates people's lives. For the convenience of input, existing electronic devices with touch screens generally support handwriting input and provide a soft keyboard (virtual keyboard) for the user to click and input words. Therein, the soft keyboard is the most common input method. The layout of the existing soft keyboard usually requires the user to adjust some settings of the soft keyboard through menu options or the like after the soft keyboard is brought up, and the adjustment scope is limited. For example, when the nine-key keyboard is usually adjusted to a full keyboard, etc., the positions and the sizes of the keys of the soft keyboard are usually fixed.

### SUMMARY

Embodiments of the present disclosure provide an electronic device and a soft keyboard display method thereof, which can automatically identify a user category to display a soft keyboard having a layout corresponding to the user category, so as to facilitate the use of the user category.

Embodiments of the present disclosure provide an electronic device, comprising a display screen, a processor and a biometric acquisition unit. The biometric acquisition unit is configured to acquire a biometric image of a current user of the electronic device. The processor comprises: an analyzing module, configured to analyze the biometric image acquired by the biometric acquisition unit using an image processing technology, and determine a current user category according to an analysis result; and a keyboard layout determining module, configured to determine a corresponding keyboard layout information according to the current user category; and a display control module, configured to control the display screen to display a soft keyboard having a corresponding layout according to the corresponding keyboard layout information after receiving a soft keyboard retrieval request.

Embodiments of the present disclosure provide a soft keyboard display method, applied to an electronic device. The method comprises steps of: acquiring a biometric image of a current user of the electronic device; analyzing the acquired biometric image using an image processing technology, and determining a current user category according to an analysis result; determining a corresponding keyboard layout information according to the current user category; and controlling the display screen to display a soft keyboard having a corresponding layout according to the corresponding keyboard layout information after receiving a soft keyboard retrieval request.

The electronic device and the soft keyboard display method of the present disclosure can determine the current user category firstly, and then display the soft keyboard that conforms to the user category for using by the user, which is more user-friendly.

### BRIEF DESCRIPTION OF THE ACCOMPANYING DRAWINGS

To describe technology solutions in the embodiments of the present disclosure more clearly, the following briefly introduces the accompanying drawings required for describing the embodiments. Obviously, the accompanying drawings in the following description show merely some embodiments of the present disclosure, those of ordinary skill in the art may also derive other obvious variations based on these accompanying drawings without creative efforts.
FIG. 1 is a block diagram of an electronic device according to one embodiment of the present disclosure.
FIG. 2 is a schematic diagram of a soft keyboard displayed by a display screen of the electronic device according to one embodiment of the present disclosure.
FIG. 3 is a schematic diagram of an input box displayed by the display screen of the electronic device according to one embodiment of the present disclosure.
FIG. 4 is a schematic diagram showing steps of image processing technique according to one embodiment of the present disclosure.
FIG. 5 is a schematic diagram of a mapping table between user categories and keyboard layout information according to one embodiment of the present disclosure.
FIG. 6 is a flowchart of a soft keyboard display method according to one embodiment of the present disclosure.
FIG. 7 is a sub-flowchart of one embodiment of step S605 of FIG. 6.

### DETAILED DESCRIPTION OF ILLUSTRATED EMBODIMENTS

The technical solution in the embodiments of the present disclosure will be described clearly and completely hereinafter with reference to the accompanying drawings in the embodiments of the present disclosure. Obviously, the described embodiments are merely some but not all the embodiments of the present disclosure. All other embodiments obtained by a person of ordinary skill in the art based on the embodiments of the present disclosure without creative efforts shall all fall within the protection scope of the present disclosure.

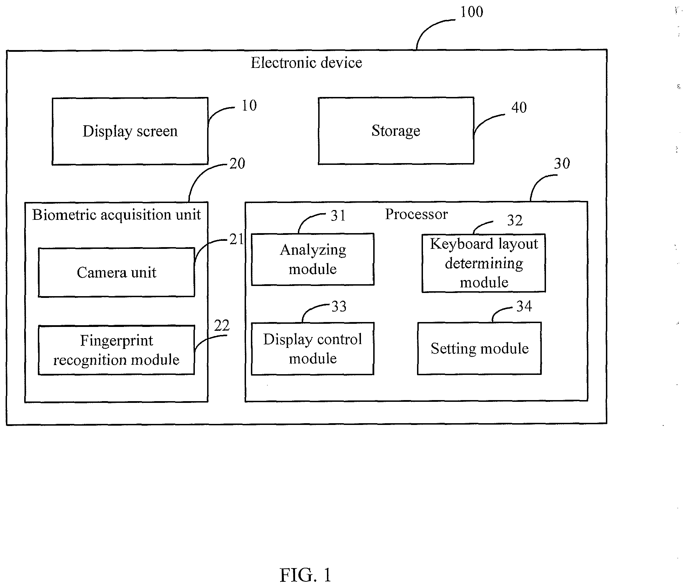

Referring to FIG. 1, which is a block diagram of an electronic device 100 according to one embodiment of the present disclosure. The electronic device 100 includes a display screen 10, a biometric acquisition unit 20, a processor 30 and a storage 40.

The biometric acquisition unit 20 is configured to acquire a biometric image of a current user of the electronic device 100. Therein, the current user of the electronic device 100 refers to a user that is currently operating the electronic device 100.

The processor 30 includes an analyzing module 31, a keyboard layout determining module 32 and a display control module 33.

The analyzing module 31 is configured to analyze the biometric image acquired by the biometric acquisition unit 20 using an image processing technology, and determine a current user category according to an image analysis result.

The keyboard layout determining module 32 is configured to determine a corresponding keyboard layout information according to the current user category. In detail, the storage 40 stores a mapping table of the user categories and the keyboard layout information. The keyboard layout determining module 32 determines the keyboard layout information corresponding to the user category according to the mapping table between the user categories and the keyboard layout information.

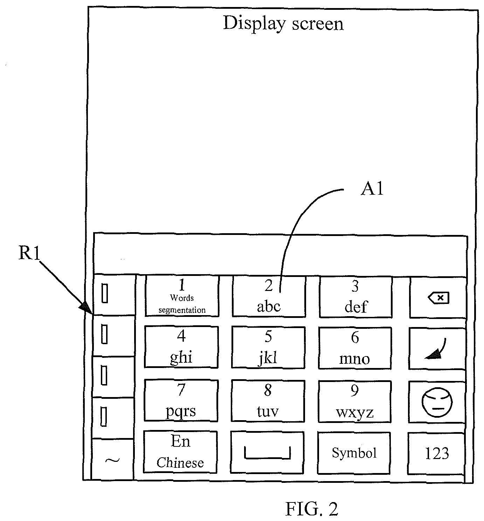

Referring to FIG. 2, the display control module 33 is configured to control the display screen 10 to display a soft keyboard (virtual keyboard) R1 having the layout/corresponding layout according to the keyboard layout information determined by the keyboard layout determining module 32 after receiving a soft keyboard retrieval request. Therein, the keyboard layout information defines a layout of the soft keyboard R1. The layout of the soft keyboard R1 includes a size of the soft keyboard R1, a full keyboard display mode, a nine-key display mode, a style of the keyboard, and arrangement locations of the keys A1 of the soft keyboard R1, and the like. Therein, the size of the soft keyboard R1 includes an overall size of the keyboard and sizes of keys A1 included in the soft keyboard R1.

Therefore, in the present disclosure, the current user category can be firstly determined, and the soft keyboard that conforms to the user category can be then displayed for using by the user, which is more user-friendly.

Therein, the biometric image of the user may be a facial image, an eye iris image, a fingerprint image, etc. of the user. As shown in FIG. 1, the biometric acquisition unit 20 may include a camera module 21 configured for capturing a face image, an eye iris image, etc. of a user. The biometric acquisition unit 20 may further include a fingerprint recognition module 22 for acquiring a fingerprint image of the user in response to a user's finger touch. The camera module 21 can be a camera. The fingerprint recognition module 22 can be a fingerprint recognition chip.

In some embodiments, after the display screen 10 is unlocked by the user, the biometric acquisition unit 20 acquires the biometric image of the user and stores the biometric image in the storage 40. The analyzing module 31 acquires the biometric image of the user from the storage 40, and analyzes the biometric image acquired by the biometric acquisition unit 20 using the image processing technology, and determines the current user category according to the analysis result. The keyboard layout determining module 32 determines the keyboard layout information of the corresponding soft keyboard R1 according to the current user category, and stores the determined keyboard layout information of the soft keyboard R1 in the storage 40. The display control module 33 acquires the corresponding keyboard layout information from the storage 40, and controls the display screen 10 to display the soft keyboard R1 having the corresponding layout after receiving the soft keyboard retrieval request.

In another embodiment, the biometric acquisition unit 20 acquires the biometric image of the user immediately after the user inputs a soft keyboard retrieval request. The analyzing module 31 analyzes the biometric image acquired by the biometric acquisition unit 20 immediately using the image processing technology, and determines the current user category according to the analysis result. The keyboard layout determining module 32 determines the corresponding keyboard layout information of soft keyboard R1 according to the current user category. The display control module 33 controls the display screen 10 to display the soft keyboard R1 having the layout according to the keyboard layout information. Since the acquiring speed of the biometric acquisition unit 20 and the processing speed of each module of the processor 30 are fast, the time interval between the user inputting the soft keyboard retrieval request and displaying the soft keyboard R1 is very short, which does not affect the user's use.

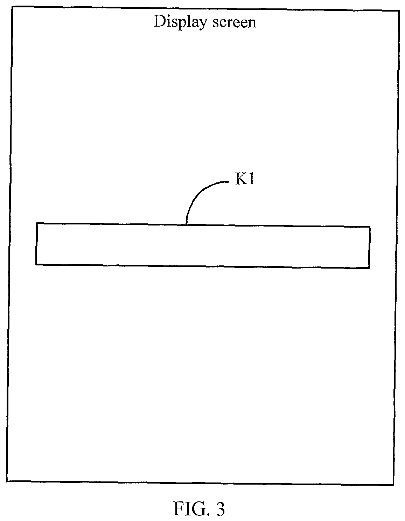

Referring to FIG. 3, therein, the display screen 10 is also configured to display an input box K1 of an application software or a system software. The soft keyboard retrieval request is invoked after the user clicks on the input box K1.

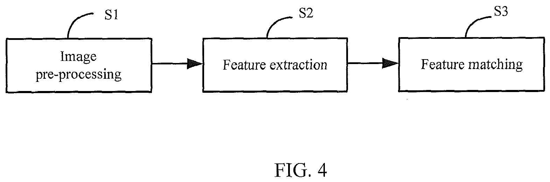

Referring to FIG. 4, FIG. 4 is a schematic diagram showing steps of the analyzing module 31 analyzing the biometric image acquired by the biometric acquisition unit 20 through the image processing technique. The image processing technique includes three main steps including image pre-processing S1, feature extraction S2, and feature matching S3.

Therein, the image pre-processing S1 includes background separation, image enhancement, image binarization, and image refinement. The background separation refers to separating the image area from the background, thereby avoiding feature extraction in areas without valid information, speeding up subsequent processing, and improving accuracy of image feature extraction and matching. The purpose of image enhancement is to improve image quality and restore its original structure. The image binarization is the conversion of an image from a grayscale image to a binary image. The image refinement is the conversion of a clear but non-uniform binary image into a dotted line image with a line width of only one pixel.

The feature extraction S2 includes extraction of overall features and/or extraction of local detail features to obtain extracted features including overall features and/or local detail features. The overall features include features such as a directional pattern, a singular point, and the like. The local detail features include some endpoints and bifurcation points, etc. of the image. For example, for the fingerprint image, the overall features include a singular point such as a center point and a triangle point, etc. of the fingerprint, and the local detail features include endpoints or bifurcation points such as an island, a termination point, an isolated point, a closed loop, a branch point, and the like.

Therein, the storage 40 further pre-stores feature templates of different user categories. The feature matching S3 refers to comparing the extracted feature extracted in the feature extraction with a pre-stored feature template, and further determining a matching feature template according to a comparison result. The analyzing module 31 determines the user category corresponding to the feature template according to the feature template matched with the extracted feature.

That is, the analyzing module 31 performs image pre-processing such as background separation, image enhancement, image binarization, image refinement and the like on the biometric image, and performs feature extraction to extract overall features and/or local detail features of the image-pre-processed biometric image to obtain the extracted feature, and compares the extracted feature with the pre-stored feature template, and determines the matched feature template according to the comparison result, and further determines the user category corresponding to the feature template.

Therein, the user category includes but is not limited to: the user's authentication identity, the user's age, gender, and the like. The feature templates may include authentication user feature templates, feature templates for people of different age stages, gender feature templates, and the like. Therein, the feature templates for people of different age stages includes a plurality of feature templates corresponding to different age stages, such as a child, an adult or an elderly feature template. The gender feature template includes a male feature template and a female feature template. The layout of the soft keyboard includes, but is not limited to, a size of the soft keyboard, a position layout of the keys of the soft keyboard, the display interface style of the soft keyboard, and the like.

In some embodiments, the "comparing the extracted feature with the pre-stored feature template, and determines the matched feature template according to the comparison result, and further determines the user category corresponding to the feature template"specifically includes: the analyzing module 31 compares the feature extracted after the biometric image analysis with the authenticated user feature template stored in the storage 40 firstly, and determines whether it is an authenticated user according to the comparison result, and if not, further compares the extracted feature with at least one of feature templates for people of different age stages and the gender feature templates, and further determines at least one of the age and gender of the user to determine the user category.

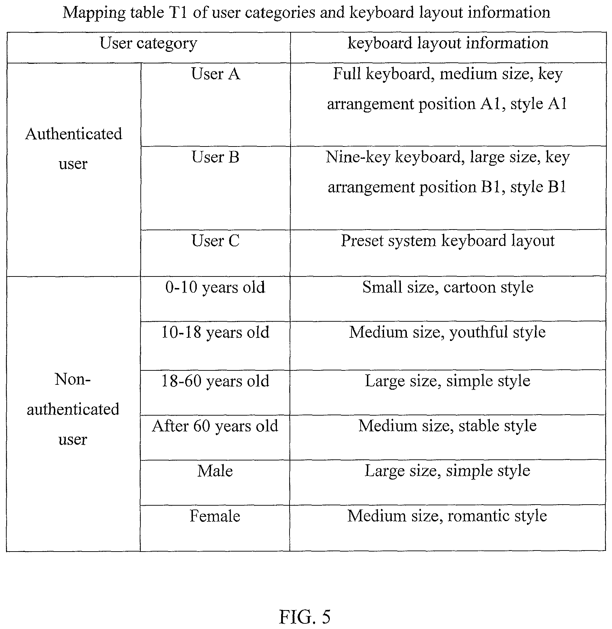

Referring to FIG. 5, a schematic diagram of the mapping table T1 of the user categories and the keyboard layout information is shown. In the mapping table T1, a correspondence relationship between a plurality of user categories and a plurality of keyboard layout information is defined. Specifically, as shown in FIG. 5, the user category includes an authenticated user and a non-authenticated user. The authenticated user is the holder of the electronic device 100 or an authorized user with the authentication information retained in the electronic device 100. For example, the user has the identity authentication information such as fingerprint authentication information, face image information, age information, gender information, and the like in the electronic device 100, and thus becomes an authenticated user. The non-authenticated user refers to an unauthorized user of the electronic device 100, that is, the electronic device 100 does not store any identity authentication information of the user. Each authenticated user recorded in the mapping table T1 includes corresponding keyboard layout information or does not include corresponding keyboard layout information. The non-authenticated user includes users of different age stages, different genders, and each non-authenticated user category corresponds to corresponding keyboard layout information in advance.

For example, as shown in FIG. 5, the mapping table T1 records identity information A1 of the authentication user A and the corresponding keyboard layout information which is a full keyboard with a medium size. As shown in FIG. 5, the mapping table T1 also records keyboard layout information corresponding to each age stage of the non-authenticated users and keyboard layout information corresponding to the gender of the non-authenticated user. For example, a gender male corresponds to a large-sized, minimalist-style interface, and a gender female corresponds to a medium-sized, romantic-style interface, and the like.

The keyboard layout determining module 32 determines a corresponding keyboard layout information according to the current user category. Specifically, the keyboard layout determining module 32 determines whether the current user is an authenticated user, when the current user is determined to be the authenticated user, the keyboard layout determining module 32 further determines whether the current user has a corresponding keyboard layout information according to the correspondence relationship, if yes, determines the keyboard layout information corresponding to the authentication user as keyboard layout information corresponding to the user category according to the mapping table; if not, the keyboard layout determining module 32 determines the current user as a non-authenticated user, that is, determines the current user's age, gender, and the like, and further determines the keyboard layout information corresponding to the current user's age and/or gender. If the current user is a non-authenticated user, the keyboard layout determining module 32 also determines the age, gender, and the like of the current user, and determines the keyboard layout information corresponding to the current user's age and/or gender as the keyboard layout information corresponding to the user category.

Therein, as mentioned above, determining whether the current user is an authenticated user, refers that, the analyze module 31 compares the feature extracted after the biometric image analysis with the feature template of the authenticated user stored in the storage 40, to get a result of whether it is an authenticated user.

In some embodiments, the priority of the age is greater than that of the gender. For example, the keyboard layout determining module 32 determines the age of the current user is 0-10 years old, and the gender of the current user is male, then, the keyboard layout information corresponding to the age is determined to be a small-sized, cartoon-style interface preferentially. Therein, the style in this article refers to a style of a skin interface of the keyboard.

Obviously, FIG. 5 is merely an illustrative example. The keyboard layout information corresponding to the age and the gender may include other information obviously, and may also correspond to other keyboard layout information.

Therein, the processor 40 may further include a setting module 34. The setting module 34 is further configured to determine an adjusted keyboard layout information according to adjusting operations of the authenticated user applied to the soft keyboard, and further store the keyboard layout information and the authenticated user information in the mapping table T1. Obviously, when the authentication user does not perform the adjustment operation to the soft keyboard, in the mapping table T1, the keyboard layout information corresponding to the authentication user information is a default keyboard layout of the electronic device 10.

Therein, the setting module 34 further sets a correspondence relationship between the user of different age stages and the keyboard layout information in response to operations of the authenticated user, and sets a correspondence relationship between the users of different genders and the keyboard layout information, and stores them in the mapping table T1. Obviously, in some embodiments, the correspondence relationship between the user of different age stages and the keyboard layout information, and between the user of different genders and the keyboard layout information may also be set by default before the electronic device 100 leaves the factory.

Therein, the processor 30 can be a processing chip such as a central processor, a micro controller, a microprocessor, a single chip microcomputer, or a digital signal processor, and the like. In some embodiments, the analyzing module 31, the keyboard layout determining module 32, the display control module 33, and the setting module 34 are program instructions called and executed by the processor 30. In other embodiments, the analyzing module 31, the keyboard layout determining module 32, the display control module 33, and the setting module 34 may be hardware circuits or firmware in the processor 30.

The storage 40 can be a storage device such as a flash memory, a solid state memory, a hard disk, or the like. The display screen 10 can be a touch display screen. The electronic device 100 can be a mobile phone, a tablet computer, a notebook computer, or the like.

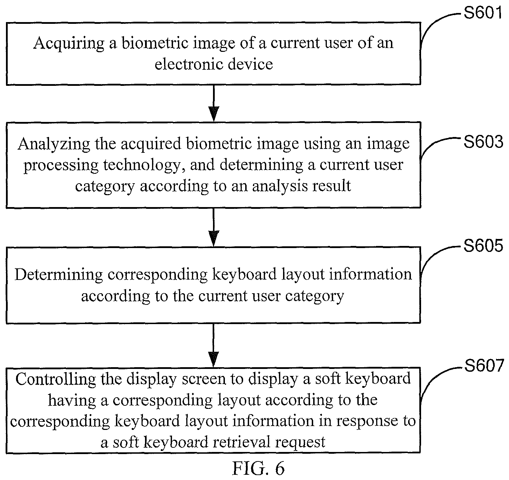

Referring to FIG. 6, a flowchart of a soft keyboard display method according to one embodiment of the disclosure is shown. The method is applied to the above electronic device 100. The method includes the steps of:
A biometric image of a current user of the electronic device 100 is acquired (S601). Therein, the biometric image can be a facial image, an eye iris image, a fingerprint image, etc. of the user. In some embodiments, the step S601 includes: the biometric image of the user is acquired and stored in the storage 40 after the display screen 10 is unlocked by the user. In another embodiment, the step S601 includes: the user's biometric image is acquired immediately when the user inputs a soft keyboard retrieval request.

The acquired biometric image is analyzed using an image processing technology, and a current user category is determined according to an analysis result (S603). In some embodiments, the step S603 includes: the image pre-processing including background separation, image enhancement, image binarization, image refinement and the like to the biometric image is performed; and the feature extraction to extract overall features and/or local detail features of the image-pre-processed biometric image to obtain the extracted feature is performed; and the extracted feature is compared with the pre-stored feature template; and the matched feature template is determined according to the comparison result, and the user category corresponding to the feature template is further determined. Therein, "the extracted feature is compared with the pre-stored feature template; and the matched feature template is determined according to the comparison result; and the user category corresponding to the feature template is further determined"specifically includes: the extracted feature is compared with the authenticated user feature template firstly to determine whether it is an authenticated user, and if not, the extracted feature is further compared with at least one of feature templates for the different age stages and the gender feature templates, and etc.; and at least one of the age and gender of the user is further determined to determine the user category.

Corresponding keyboard layout information is determined according to the current user category (S605). In detail, the keyboard layout information corresponding to the user category is determined according to the mapping table between the user categories and the keyboard layout information.

The display screen is controlled to display a soft keyboard R1 having the corresponding layout according to the corresponding keyboard layout information after receiving a soft keyboard retrieval request (S607). The mapping table T1 records the identity information of each authentication user and the keyboard layout information corresponding to the authentication user.

In some embodiments, the method further includes the step of: the processor 30 is further configured to determine an adjusted keyboard layout information according to adjustment operations of the authentication user applied to the soft keyboard, and store the correspondence relationship between the keyboard layout information and the authentication user information in the mapping table T1.

In some embodiments, the method further includes the step of: the processor 30 further sets the correspondence relationship between the users of different age stages and the keyboard layout information, and sets the correspondence relationship between the user of different genders and the keyboard layout information in response to the operations of the authenticated user, and further stores it in the mapping table T1.

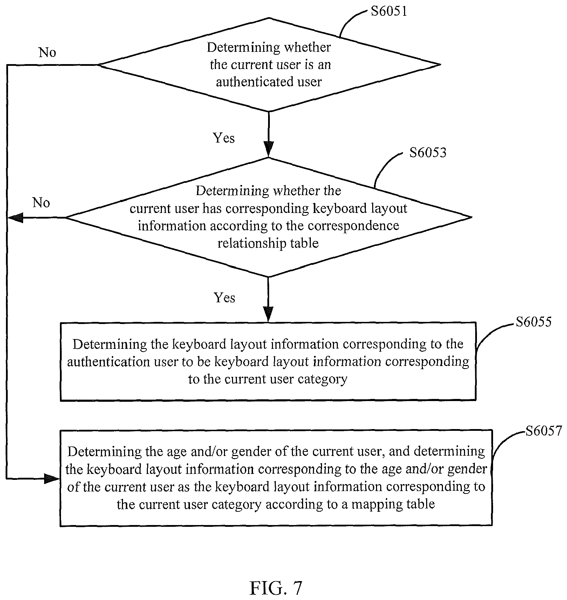

Referring to FIG. 7, a sub-flowchart of step S605 in one embodiment of the present disclosure is shown. In some embodiments, each authenticated user includes corresponding keyboard layout information or does not include corresponding keyboard layout information. Non-authenticated users include users of different age stages and genders, and each non-authenticated user category corresponds to corresponding keyboard layout information. The step S605 specifically includes the step of:

It is determined whether the current user is an authenticated user (S6051). If yes, the process goes to step S6053, if no, the process goes to step S6057.

It it determined whether the current user has corresponding keyboard layout information according to the mapping table T1 (S6053). If yes, the process goes to step S6055, and if no, the process goes to step 6057.

The keyboard layout information corresponding to the authentication user is determined as the keyboard layout information corresponding to the current user category (S6055).

The age and/or gender of the current user is determined, and the keyboard layout information corresponding to the age and/or gender of the current user is determined as the keyboard layout information corresponding to the current user category according to the mapping table T1 (S6057).

Therefore, the electronic device 100 and the soft keyboard display method of the present disclosure can automatically determine the user category and display a soft keyboard conforming to the user category.

The above is a preferred embodiment of the present disclosure, and it should be noted that those skilled in the art may make some improvements and modifications without departing from the principle of the present disclosure, and these improvements and modifications are also the protection scope of the present disclosure.

## Claims

1. An electronic device, comprising a display screen, a processor, wherein, the electronic device further comprises a biometric acquisition unit configured to acquire a biometric image of a current user of the electronic device; the processor comprises:
an analyzing module configured to analyze the biometric image acquired by the biometric acquisition unit using an image processing technology, and determine a current user category according to an analysis result;
a keyboard layout determining module configured to determine a corresponding keyboard layout information according to the current user category; and
a display control module configured to control the display screen to display a soft keyboard having a corresponding layout according to the corresponding keyboard layout information after receiving a soft keyboard retrieval request.

2. The electronic device according to claim 1, wherein the biometric image of the user comprises a facial image, an eye iris image, and a fingerprint image of the user; the biometric acquisition unit comprises a camera module and a fingerprint recognition module; the camera module is configured for capturing a face image or an eye iris image of the user; and the fingerprint recognition module is configured for acquiring a fingerprint image of the user in response to a user's finger touch.

3. The electronic device according to claim 1, wherein the biometric acquisition unit acquires the biometric image of the current user after the display screen is unlocked by the user or the soft keyboard retrieval request is input.

4. The electronic device according to any one of claims 1∼3, wherein the electronic device further comprises a storage; the storage further stores feature templates corresponding to different user categories; and the analyzing module performs image pre-processing including background separation, image enhancement, image binarization and image refinement to the biometric image, and performs feature extraction to extract overall features and/or local detail features of an image-pre-processed biometric image to obtain the extracted feature, and compares the extracted feature with pre-stored feature templates, and determines a matched feature template according to a comparison result, and further determines the user category corresponding to the feature template.

5. The electronic device according to claim 4, wherein the feature template comprises authentication user feature templates, feature templates for people of different age stages, and gender feature templates; the analyzing module compares the feature extracted after a biometric image analysis with the authenticated user feature templates stored in the storage, and determines whether the user is an authenticated user, if not, further compares the extracted feature with at least one of the feature templates for people of different age stages and the gender feature templates, and determines user's age and/or gender according to a comparison result, and further determines the user category according to the user's age and/or gender.

6. The electronic device according to claim 4, wherein the storage further stores a mapping table between the user categories and the keyboard layout information; and the keyboard layout determining module determines the keyboard layout information corresponding to the user category according to the mapping table between the user categories and the keyboard layout information.

7. The electronic device according to claim 6, wherein the user comprises an authenticated user and a non-authenticated user; the mapping table records the keyboard layout information corresponding to the authenticated user, and the keyboard layout information corresponding to the users of different age stages, and different genders; the keyboard layout determining module determines whether the current user has corresponding keyboard layout information according to the mapping table when the current user is the authenticated user, if yes, determines the keyboard layout information corresponding to the authentication user as the keyboard layout information corresponding to the current user category according to the mapping table, if not or the current user's category is a non-authenticated user, determines the current user's age and/or gender, and determines the keyboard layout information corresponding to the current user's age and/or gender as the keyboard layout information corresponding to the current user's category.

8. The electronic device according to claim 7, wherein the authenticated user is a holder of the electronic device or an authorized user with authentication information retained in the electronic device; and the authentication information comprises identity information comprising fingerprint authentication information, facial image information, age information, and gender information.

9. The electronic device according to claim 7, wherein the processor further comprises a setting module, configured to determine adjusted keyboard layout information according to adjustment operations of the authentication user applied to the soft keyboard, and store the keyboard layout information and the authenticated user information correspondingly in the mapping table.

10. The electronic device according to any one of claims 1∼3, wherein the keyboard layout information comprises a size of the soft keyboard, a full keyboard display mode, a nine-key display mode, a style of the keyboard, and arrangement locations of keys of the soft keyboard.

11. The electronic device according to any one of claims 1∼3, wherein the display screen is further configured to display an input box, and the soft keyboard retrieval request is invoked by a click applied on the input box.

12. A soft keyboard display method, applied to an electronic device, wherein, the method comprises steps of:
acquiring a biometric image of a current user of the electronic device;
analyzing the acquired biometric image using an image processing technology, and determining a current user category according to an analysis result;
determining a corresponding keyboard layout information according to the current user category; and
controlling the display screen to display a soft keyboard having a corresponding layout according to the corresponding keyboard layout information after receiving a soft keyboard retrieval request.

13. The soft keyboard display method according to claim 12, wherein the step "acquiring a biometric image of a current user of the electronic device" comprises:
acquiring a facial image, an eye iris image, and a fingerprint image of the user.

14. The soft keyboard display method according to claim 12, wherein the step "acquiring a biometric image of a current user of the electronic device" comprises:
acquiring the biometric image of the current user after the display screen is unlocked or the soft keyboard retrieval request is input.

15. The soft keyboard display method according to any one of claims 12∼14, wherein the electronic device stores feature templates corresponding to different user categories, "analyzing the acquired biometric image using an image processing technology, and determining a current user category according to an analysis result" comprises:
performing pre-processing including background separation, image enhancement, image binarization and image refinement to the biometric image;
performing feature extraction to extract overall features and/or local detail features of an image-pre-processed biometric image to obtain the extracted feature; and
comparing the extracted feature with pre-stored feature templates, and determining a matched feature template according to a comparison result, and further determining the user category corresponding to the feature template.

16. The soft keyboard display method according to claim 15, wherein the feature template comprises authentication user feature templates, feature templates for people of different age stages, and gender feature templates, "comparing the extracted feature with pre-stored feature templates, and determining a matched feature template according to a comparison result, and further determining the user category corresponding to the feature template" comprises:
comparing the extracted feature with the authenticated user feature templates, and determines whether the user is an authenticated user; and
if not, further comparing the extracted feature with at least one of feature templates for people of different age stages and the gender feature templates, and further determining user's age and/or gender according to a comparison result, and further determining the user category according to the user's age and/or gender.

17. The soft keyboard display method according to any one of claims 12∼14, wherein the electronic device further stores a mapping table between the user category and the keyboard layout information, "determining a corresponding keyboard layout information according to the current user category" comprises:
determining the keyboard layout information corresponding to the user category according to the mapping table between the user category and the keyboard layout information.

18. The soft keyboard display method according to claim 17, wherein the user comprises an authenticated user and a non-authenticated user; the mapping table records the keyboard layout information corresponding to the authenticated user, and the keyboard layout information corresponding to users of different age stages, different genders, the step "determining the keyboard layout information corresponding to the user category according to the mapping table between the user category and the keyboard layout information" comprises:
determining whether the current user has corresponding keyboard layout information according to the when the current user is the authenticated user;
if yes, determining the keyboard layout information corresponding to the authentication user as the keyboard layout information corresponding to current user category according to the mapping table; and
if not or the current user's category is the non-authenticated user, determining the current user's age and/or gender, and determining the keyboard layout information corresponding to the current user's age and/or gender as the keyboard layout information corresponding to the current user's category.

19. The soft keyboard display method according to claim 18, wherein the authenticated user is a holder of the electronic device or an authorized user with authentication information retained in the electronic device, and the authentication information comprises identity information including fingerprint authentication information, facial image information, age information, and gender information; the non-authenticated user is an unauthorized user of the electronic device

20. The soft keyboard display method according to claim 18, wherein the method further comprises:
determining adjusted keyboard layout information according to adjustment operations of the authentication user to the soft keyboard, and storing the keyboard layout information and the authenticated user information correspondingly in the mapping table.
